# EUROPEAN PATENT APPLICATION

(11) **EP 4 841 749 A1**
(43) Date of publication of application: **18.11.2026**
(21) Application number: 24933034.1
(22) Date of filing: 15.08.2024
(51) Int. Cl.: H01M 10/613, H01M 10/6557, H01M 10/6567, H01M 10/6568, H01M 10/625, H01M 10/63

(54) **HEAT EXCHANGE ASSEMBLY, BATTERY, BATTERY MANAGEMENT SYSTEM, AND ELECTRICAL APPARATUS**

(30) Priority: 26.03.2024 CN 202420589492 U
(71) Applicant: Contemporary Amperex Technology Co., Limited, Ningde, Fujian 352100 (CN)
(72) Inventor: GUO, Haijian, Ningde, Fujian 352100 (CN)
(74) Representative: Ziebig Hengelhaupt Intellectual Property Attorneys Patentanwaltskanzlei PartGmbB
(86) International application number: PCT/CN2024/112466
(87) International publication number: WO 2025/200241

(57) **Abstract**

The present application relates to a heat exchange assembly, a battery, a battery management system, and an electrical apparatus. The heat exchange assembly comprises: a heat exchange body, there being a heat exchange medium flowing in the heat exchange body; a flow collector, the flow collector being disposed at at least one end of the heat exchange body, and the flow collector being used for leading heat exchange medium out of, or introducing heat exchange medium into, the heat exchange body; and a sensing apparatus, disposed on the flow collector so as to sense one or more of the pressure, flow velocity, and temperature of the heat exchange medium. The heat exchange assembly, the battery, the battery management system, and the electrical apparatus of the embodiments of the present application, can provide timely feedback when a problem occurs.

## Description

### CROSS-REFERENCE TO RELATED APPLICATIONS

The present application claims priority to Chinese Patent Application No. 2024205894921 filed on March 26, 2024 and entitled "HEAT EXCHANGE ASSEMBLY, BATTERY, BATTERY MANAGEMENT SYSTEM, AND POWER CONSUMING APPARATUS", which is incorporated herein by reference in its entirety.

### TECHNICAL FIELD

The present application relates to the field of battery technologies, and in particular, to a heat exchange assembly, a battery, a battery management system, and a power consuming apparatus.

### BACKGROUND

With the wide development of new energy technologies, batteries have been widely applied. Generally, a battery radiates heat during use, and a heat exchange system needs to be used to ensure that the battery operates at a suitable ambient temperature, thereby prolonging a service life and charging and discharging efficiency of the battery. Currently, a technology of using a heat exchange assembly to control a temperature of a battery gradually becomes a mainstream solution of battery thermal management. However, when a problem occurs in a current heat exchange assembly, feedback usually cannot be performed in time, affecting use experience of the battery.

### SUMMARY

Based on this, to resolve the problem that the current heat exchange assembly cannot perform feedback in time when a problem occurs, it is necessary to provide a heat exchange assembly, a battery, a battery management system, and a power consuming apparatus.

A first aspect of embodiments of the present application provides a heat exchange assembly, including: a heat exchange body, where a heat exchange medium flows inside; a flow collector, where the flow collector is disposed on at least one end of the heat exchange body, and the flow collector is configured to lead the heat exchange medium out of or into the heat exchange body; and a sensing apparatus, where the sensing apparatus is disposed on the flow collector, to sense one or more of a pressure, a flow rate, and a temperature of the heat exchange medium.

In this way, a current condition of the heat exchange medium inside each heat exchange body can be sensed by using the sensing apparatus, and further, is used as a basis for determining a working status of the heat exchange assembly, and can be fed back in time when a problem occurs in the heat exchange assembly. When a condition such as sealing of a flow channel, or leakage of the heat exchange medium due to aging and cracking of the heat exchange body, or leakage of the heat exchange medium due to crushing and deformation of the heat exchange body by a weight of a battery cell occurs inside the heat exchange body, the sensing apparatus can effectively sense the current working status by using one or more of the pressure, the flow rate, and the temperature of the heat exchange medium, to effectively detect a temperature change of each heat exchange body and confirm a circulation status of the heat exchange medium. When an abnormality occurs in the heat exchange body, warning is performed in advance, to ensure that the battery cell operates at a suitable operating temperature, thereby prolonging a service life of the battery cell and improve performance of the battery cell. When a plurality of heat exchange assemblies are stacked, and a battery cell is placed between two heat exchange assemblies to perform heat exchange, after a problem occurs in one of the heat exchange assemblies, a fault can be quickly located by using a sensing apparatus corresponding to the heat exchange assembly, to remove potential safety hazards in time and ensure safety.

In an embodiment, the sensing apparatus includes a collection terminal and a connector; the collection terminal at least partially extends into the heat exchange body, to sense the one or more of the pressure, the flow rate, and the temperature of the heat exchange medium; and the connector is disposed on a side of the flow collector facing away from the heat exchange body and is connected to the collection terminal; and the connector is capable of being configured to perform signal connection with an external apparatus. In this way, by disposing the collection terminal and the connector, the current condition of the heat exchange medium inside each heat exchange body can be sensed by using a corresponding collection terminal. When a condition such as sealing of a flow channel, or leakage of the heat exchange medium due to aging and cracking of the heat exchange body, or leakage of the heat exchange medium due to crushing and deformation of the heat exchange body by a weight of a battery cell occurs inside the heat exchange body, a relatively large change occurs in the temperature, the flow rate, or the pressure of the heat exchange medium. The collection terminal converts the change into a corresponding electric signal and transmits the electric signal to the connector. The connector then transmits the electric signal to an external apparatus, so that the electric signal is used as a basis for determining the working status of the current heat exchange assembly, and can be fed back in time when the problem occurs in the heat exchange assembly.

In an embodiment, the sensing apparatus and the flow collector are integrally injection-molded. In this way, the heat exchange medium can be prevented from leaking from a connection position between the sensing apparatus and the flow collector, thereby ensuring a heat exchange function of the heat exchange assembly.

In an embodiment, the sensing apparatus is a temperature sensor; or the sensing apparatus is a pressure sensor; or the sensing apparatus is a speed sensor.

In an embodiment, a plurality of support plates are arranged at intervals inside the heat exchange body, to form a plurality of heat exchange flow channels separated from each other in an inner space of the heat exchange body; and the sensing apparatus is capable of performing sensing detection on at least one of the heat exchange flow channels. In this way, it is convenient for the heat exchange medium to respectively enter different heat exchange flow channels to flow according to predetermined tracks, thereby improving the heat exchange efficiency. The sensing apparatus can feed back corresponding information in time, so that the information can be used as a basis for determining the working status of the current heat exchange assembly, and can be fed back in time when the problem occurs in the heat exchange assembly.

In an embodiment, the heat exchange body is a harmonica pipe. In this way, the heat exchange body has good heat exchange performance.

In an embodiment, the heat exchange assembly includes two groups of flow collectors; the two groups of flow collectors respectively cover a liquid outlet end and a liquid inlet end of the heat exchange body; and the sensing apparatus is disposed on a flow collector located on the liquid outlet end of the heat exchange body. In this way, a flow condition of the heat exchange medium inside each heat exchange body can be sensed by using the sensing apparatus. When a condition such as sealing of a flow channel, or leakage of the heat exchange medium due to aging and cracking of the heat exchange body, or leakage of the heat exchange medium due to crushing and deformation of the heat exchange body by a weight of a battery cell occurs inside the heat exchange body, a change amplitude of a pressure, a flow rate, and a temperature of the heat exchange medium at the liquid inlet end of the heat exchange body is not significant. Because the heat exchange medium cannot reach the liquid outlet end through the heat exchange flow channel, a change of a pressure, a flow rate, and a temperature of the heat exchange medium sensed by a sensing apparatus located at the liquid outlet end of the heat exchange body is relatively large. Therefore, the change is easily sensed by the sensing apparatus, and further can be transmitted to an external apparatus, and finally, the change is used as a basis for determining the working status of the current heat exchange assembly.

In an embodiment, the flow collector includes a flow collecting body, and an insertion cavity open on one side is formed on the flow collecting body; and an end of the heat exchange body is inserted into the insertion cavity; and the sensing apparatus at least partially extends into the insertion cavity.

In this way, the sensing apparatus can sense the one or more performance indicators of the pressure, the flow rate, and the temperature of the heat exchange medium in time and accurately, and further, the one or more performance indicators can be used as a basis for the control module to determine the working status of the heat exchange assembly, and can be fed back in time when a problem occurs in the heat exchange assembly.

In an embodiment, the flow collecting body includes a plurality of fasteners, the fasteners are erected in the insertion cavity, a gap is formed between the fastener and a side wall of the insertion cavity, and a side wall of an end of the heat exchange body is capable of being inserted into the gap. In this way, the heat exchange body is more securely inserted into the insertion cavity of the flow collecting body, thereby avoiding separation of the two, and facilitating subsequent welding and fixing.

In an embodiment, the flow collector comprises a connection pipe, and the connection pipe passes through the insertion cavity; and the connection pipe is formed as a flow channel port on a cavity wall of the insertion cavity; and the collection terminal is located on the flow channel port. In this way, in a working process of the heat exchange assembly, the collection terminal can more accurately sense the one or more performance indicators of the pressure, the flow rate, and the temperature of the heat exchange medium, and the one or more performance indicators can further be used as a basis for the control module to determine the working status of the heat exchange assembly, and can be fed back in time when a problem occurs in the heat exchange assembly. It should be understood that, the change of the performance indicator may be determined based on the indicator such as the temperature, the pressure, or the flow rate, or may be determined based on another indicator of the heat exchange medium.

A second aspect of the embodiments of the present application provides a battery, including a battery cell and the foregoing heat exchange assembly, where a side wall of at least one side of the heat exchange body is thermal-conductively connected to the battery cell.

A third aspect of the embodiments of the present application provides a battery management system, including a control module and the foregoing battery, where the control module is in signal connection with the sensing apparatus.

A fourth aspect of the embodiments of the present application provides a power consuming apparatus, including the foregoing battery.

The foregoing descriptions are merely an overview of the technical solutions of the present application. To understand the technical means of the present application more clearly, implementation can be performed according to content of the specification. Moreover, to make the foregoing and other objectives, features, and advantages of the present application more comprehensible, specific implementations of the present application are particularly described below.

### BRIEF DESCRIPTION OF THE DRAWINGS

In order to provide a clearer explanation of the technical solution of the embodiments of the present application, a brief introduction will be given to the accompanying drawings required in the embodiments of the present application. It is evident that the accompanying drawings described below are only some embodiments of the present application. For ordinary technical personnel in the art, other accompanying drawings can be obtained based on the drawings without any creative effort. In the accompanying drawings:
FIG. 1 is a schematic structural diagram of a vehicle according to some embodiments of the present application;
FIG. 2 is a schematic structural exploded view of a battery according to some embodiments of the present application;
FIG. 3 is a schematic structural diagram of a battery module according to some embodiments of the present application;
FIG. 4 is a schematic structural exploded view of a battery cell according to some embodiments of the present application;
FIG. 5 is a schematic diagram of cooperation between a battery cell and a heat exchange assembly according to some embodiments of the present application;
FIG. 6 is a schematic structural diagram of a heat exchange assembly according to some embodiments of the present application;
FIG. 7 is a partial schematic diagram of assembly between a heat exchange body and a flow collector according to some embodiments of the present application;
FIG. 8 is a side view of a heat exchange assembly according to some embodiments of the present application;
FIG. 9 is a cross-sectional view along A-A of the heat exchange assembly shown in FIG. 8; and
FIG. 10 is a schematic structural diagram of a flow collector according to some embodiments of the present application.

### Reference numerals:

vehicle-1000; battery-100, box-110, battery module-120, battery cell-121, end cover-122, housing-123, electrode assembly-124, electrode terminal-125, controller-200, motor-300; heat exchange assembly-400; heat exchange body-10, heat exchange flow channel-11, support plate-12, flow collector-20, flow collecting body-21, insertion cavity-22, connection pipe-23, sensing apparatus-24, collection terminal-25, connector-26, fastener-27, and flow channel port-28.

### DETAILED DESCRIPTION

The technical solutions in the embodiments of the present application are clearly and completely described in the following with reference to the accompanying drawings in the embodiments of the present application. Apparently, the described embodiments are merely some rather than all of the embodiments of the present application. All other embodiments obtained by a person of ordinary skill in the art based on the embodiments of the present application without creative efforts shall fall within the protection scope of the present application.

Unless otherwise defined, meanings of all technical and scientific terms used herein are the same as those usually understood by a person skilled in the art to which the present application belongs. The terms used herein are merely intended to describe objectives of the specific embodiments, but are not intended to limit the present application. The terms "include", "have", and any variant thereof in the description, claims, and the brief description of the drawings of the present application are intended to cover a non-exclusive inclusion.

In the descriptions of the embodiments of the present application, if technical terms such as "first" and "second" appear, these terms are used merely for a description purpose to distinguish between different objects, and shall not be construed as indicating or implying relative importance or implying a quantity, a specific order, or a primary-secondary relationship of indicated technical features.

The "embodiment" mentioned in the specification means that particular features, structures, or characteristics described with reference to the embodiment may be included in at least one embodiment of the present application. The term appearing at various positions in the specification does not necessarily refer to a same embodiment, or an independent or alternative embodiment mutually exclusive with another embodiment. A person skilled in the art explicitly or implicitly understands that the embodiments described in the specification may be combined with other embodiments.

The term "and/or" in the descriptions of the embodiments of the present application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the descriptions of the embodiments of the present application, if the term "a plurality of" appears, unless otherwise specified, "a plurality of" means at least two (including two), for example, two or three. Similarly, if the term "a plurality of groups" appears, "a plurality of groups" refers to more than two groups (including two groups), and if the term "a plurality of pieces" appears, "a plurality of pieces" refers to more than two pieces (including two pieces).

In the descriptions in the embodiments of the present application, if technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like appear, directional or positional relationships indicated by these terms are based on the directional or positional relationships shown in the drawings, and these terms are merely used for the convenience of describing the embodiments of the present application and simplifying the description, rather than indicating or implying that the noted devices or elements need to have specific directions or need to be constructed and operated in specific directions. Therefore, these terms should not be construed as limitations on the embodiments of the present application.

In the descriptions in the embodiments of the present application, unless otherwise clearly specified and defined, if technical terms "mount", "connect", "connection", and "fix" appear, these terms should be understood in a broad sense. For example, the connection may be a fixed connection, a detachable connection, or an integral connection; or the connection may be a mechanical connection or an electrical connection; or the connection may be a direct connection or an indirect connection through an intermediate medium; or the connection may be an internal connection between two elements or an interaction relationship between two elements. A person of ordinary skill in the art may understand the specific meanings of the foregoing terms in the embodiments of the present application according to specific situations.

In the present application, unless otherwise specified, if the present application has descriptions such as a first characteristic "on" or "under" a second characteristic, the descriptions may mean the first characteristic in direct contact with the second characteristic, or the first characteristic in indirect contact with the second characteristic by using an intermediate medium. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

It should be noted that, if an element is expressed as "being fixed to" or "being disposed on" another element, the element may be directly on the another element, or an intermediate element may exist. If an element is considered as "being connected to" another element, the element may be directly connected to the another element, or an intermediate element may also exist. If terms "vertical", "horizontal", "upper", "down", "left", "right" and similar expressions used in the present application exist, the terms are merely for the purpose of illustration and do not indicate a unique implementation.

Nowadays, from the perspective of development of the market situation, power batteries are applied increasingly. The power batteries are used in energy storage power systems such as water power plants, fire power plants, wind power plants, and solar power plants, and are also widely used in electric mobility devices such as electric bicycles, electric motorcycles, electric vehicles, as well as in aerospace, and other fields. With continuous expansion of application fields of the power batteries, market demands for the power batteries are also expanding.

Generally, a battery radiates heat during use, and a heat exchange system needs to be used to ensure that the battery operates at a suitable ambient temperature, thereby prolonging a service life and charging and discharging efficiency of the battery. Specifically, a heat exchange solution of disposing a heat exchange assembly is mainly used for the battery cell. Heat of the battery cell is transferred to a heat exchange medium through the heat exchange assembly, and the heat exchange medium carries away the heat, to reduce the temperature of the battery.

In a battery, a plurality of heat exchange assemblies are generally stacked, and a battery cell is placed between two heat exchange assemblies. The heat exchange medium inside the heat exchange assemblies is uniformly inputted through a main liquid inlet pipe, and uniformly drained through a main liquid outlet pipe. In related technologies, data collection sensors, such as temperature sensors, are respectively disposed in the main liquid inlet pipe and the main liquid outlet pipe. When a problem (for example, sealing of a flow channel, leakage of the heat exchange medium due to aging and cracking of a heat exchange body, or leakage of the heat exchange medium due to crushing by a weight of a battery cell) occurs in one of heat exchange assemblies, because other heat exchange assemblies still operate normally, the sensors cannot determine a working status of the heat exchange assembly. Consequently, the battery cell operates at an abnormal working temperature, affecting a service life and performance. In addition, inflow of the leaked heat exchange medium into the battery cell may cause a short circuit, resulting in safety impact.

To alleviate a problem that existing heat exchange assemblies cannot perform feedback in time when a problem occurs, considering that an end of a heat exchange body is usually assembled with a flow collector, but is not directly in contact with a battery cell to radiate heat, a corresponding sensing apparatus may be disposed on the flow collector of the heat exchange assembly, to effectively detect a flow condition of a heat exchange medium in each heat exchange body.

An embodiment of the present application provides a heat exchange assembly, a battery, a battery management system, and a power consuming apparatus. The power consuming apparatus may be, but is not limited to, a mobile phone, a tablet, a laptop, an electric toy, an electric tool, a battery car, an electric vehicle, a ship, a spacecraft, or the like. The electric toy may include stationary or mobile electric toys, for example, a game console, an electric vehicle toy, an electric ship toy, and an electric aircraft toy. The spacecraft may include an airplane, a rocket, a space shuttle, a spaceship, and the like.

It should be understood that, the technical solutions described in the embodiments of the present application are not only applicable to the foregoing battery and power consuming apparatus, but also applicable to all batteries including boxes and power consuming apparatuses using the batteries. However, for the sake of brevity, in the following embodiments of the present application, an example in which the power consuming apparatus is a vehicle 1000 is used for description.

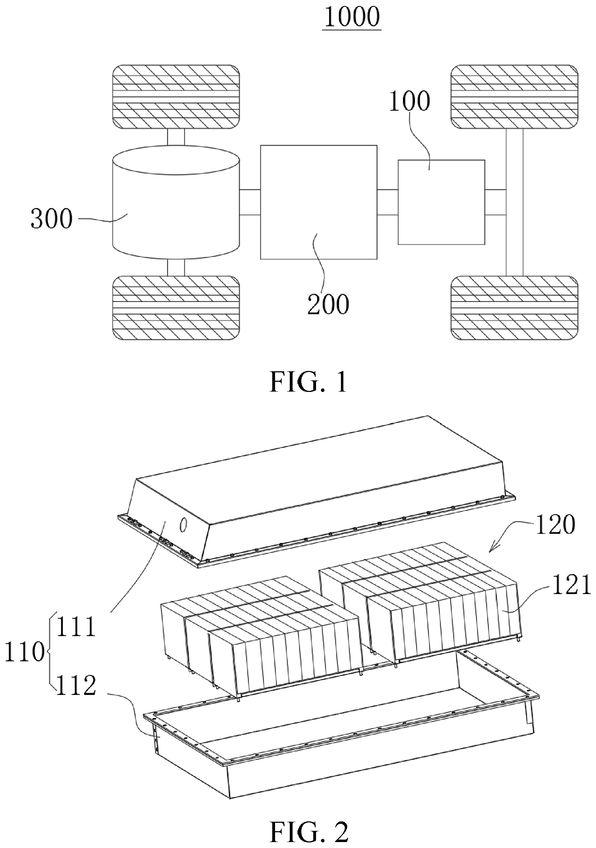

Referring to FIG. 1, FIG. 1 is a schematic structural diagram of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. The inner part of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of the present application, the battery 100 may serve not only as a power supply for operating the vehicle 1000, but also as a power supply for driving the vehicle 1000, to alternatively or partially replace fuel or natural gas to provide driving power for the vehicle 1000.

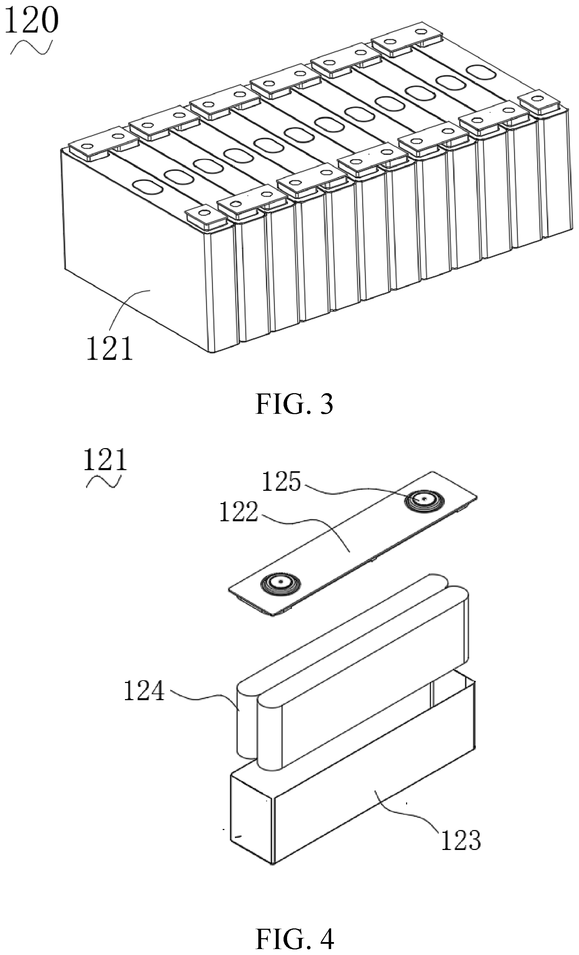

FIG. 2 is an exploded view of a battery 100 according to some embodiments of the present application; and FIG. 3 is a schematic structural diagram of a battery module according to some embodiments of the present application. Referring to FIG. 2 and FIG. 3, to satisfy different power requirements during use, the battery 100 may include a plurality of battery cells 121 and a box 110. The battery cell 121 is the smallest unit constituting a battery module 120 or a battery pack. The plurality of battery cells 121 may be connected in series and/or in parallel through electrode terminals to be used in various application scenarios. The battery 100 mentioned in the present application is a battery pack. A heat exchange body is disposed between two large surfaces of the battery cell 121, to perform heat exchange for the battery cell 121. Alternatively, a heat exchange body may be directly disposed on one large surface of the battery cell 121 to perform heat exchange.

The box 110 is configured to accommodate the battery cells 121 or the battery module 120, to prevent liquids or other foreign objects from affecting the charging or discharging of the battery cells 121.

The box 110 may use a plurality of structures. In some possible embodiments, the box 110 may include a first part 111 and a second part 112, the first part 111 and the second part 112 cover each other, and the first part 111 and the second part 112 jointly define an accommodating space for accommodating the battery cells 121. The second part 112 may be of a hollow structure with an opening at one end, the first part 111 may be of a plate-like structure, and the first part 111 covers an opening side of the second part 112, so that the first part 111 and the second part 112 jointly define the accommodating space. Alternatively, the first part 111 and the second part 112 each may be of a hollow structure with an opening on one side, and an opening side of the first part 111 covers an opening side of the second part 112. Certainly, the box 110 formed by the first part 111 and the second part 112 may be of a plurality of shapes, for example, may be a single cuboid, cylinder, sphere, or another simple three-dimensional structure, or a complex three-dimensional structure formed by combining simple three-dimensional structures such as a cuboid, a cylinder, or a sphere. This is not limited in the embodiments of the present application. The material of the box 110 may be aluminum alloy, iron alloy, or another alloy material, or polycarbonate, polyisocyanurate foam, or another polymer material, or a composite material of glass fiber and epoxy resin, which is also not limited in the embodiments of this application.

In the embodiments of the present application, the plurality of battery cells 121 may directly form a battery pack, or may first form a battery module 120, and battery modules 120 then form a battery pack. Specifically, the plurality of battery cells 121 may be directly connected in series, or in parallel, or in series-parallel to form a whole, and then the whole constituted by the plurality of battery cells 121 may be accommodated in the box 110. Alternatively, a plurality of battery cells 121 are connected in series, or in parallel, or in series-parallel to form a battery module 120, and a plurality of battery modules 120 are further connected in series, or in parallel, or in series-parallel to form a whole, which is accommodated in the box 110.

The battery 100 may also include other structures, for example, the battery 100 may also include a bus component configured to implement electrical connection among the plurality of battery cells 121.

Each battery cell 121 may be a secondary battery or a primary battery, and may alternatively be a lithium-sulfur battery, a sodium-ion battery, or a magnesium-ion battery, but is not limited thereto. The battery cell 121 may be cylindrical, flat, cuboid, or in other shapes. Generally, depending on the encapsulating method, battery cells 121 are divided into three types: columnar battery cells, cuboid prismatic battery cells, and pouch battery cells. This is also not limited in the embodiments of the present application. However, for concise description, in the following embodiments, a cuboid prismatic lithium-ion battery cell 121 is used as an example for description.

Referring to FIG. 4, FIG. 4 is a schematic structural exploded view of a battery cell 121 according to some embodiments of the present application. The battery cell 121 includes an end cover 122, a housing 123, an electrode assembly 124, and other functional components.

The end cover 122 refers to a component that covers an opening of the housing 123 to isolate an internal environment of the electrode assembly 124 from an external environment. A shape of the end cover 122 is not limited and may be adapted to a shape of the housing 123 to fit the housing 123. In some embodiments, the end cover 122 may be made of a material with specified hardness and strength (for example, aluminum alloy), so that the end cover 122 is less likely to be deformed under pressing and collision, to enable the battery cell 121 to have higher structural strength and enhanced safety performance. Functional components such as electrode terminals 125 may be disposed on the end cover 122. The electrode terminals 125 may be configured to be electrically connected with the electrode assembly 124 to output or input electrical energy of the battery cell 121. In some embodiments, the end cover 122 may also be provided with a pressure relief mechanism configured to relieve internal pressure when the internal pressure or temperature in the battery cell 121 reaches a threshold. The end cover 122 may also be made of various materials, such as copper, iron, aluminum, stainless steel, aluminum alloy, and plastic, which are not particularly limited in the embodiments of the present application. In some embodiments, an insulator may also be arranged on an inner side of the end cover 122. The insulator can be configured to isolate electrical connection parts in the housing 123 from the end cover 122, reducing a risk of short circuit. For example, the insulator may be made of plastic or rubber.

The housing 123 is an assembly configured to form an internal environment of the battery cells 121 together with the end cover 122, where the formed internal environment may be configured to accommodate the electrode assembly 124, an electrolytic solution, and other components. The housing 123 and the end cover 122 may be separate components, an opening may be provided in the housing 123, and the end cover 122 covers the opening to form the internal environment of the battery cell 121. Without limitation, the end cover 122 and the housing 123 may also be integrated. Specifically, the end cover 122 and the housing 123 may form a shared connection surface before other components are arranged inside the housing, and then the end cover 122 covers the housing 123 when inside of the housing 123 needs to be enclosed. The housing 123 may be of various shapes and sizes, such as a rectangular shape, a cylindrical shape, and a hexagonal prism shape. Specifically, the shape of the housing 123 may be determined based on a specific shape and size of an electrode assembly 124. The housing 123 may be made of various materials, such as copper, iron, aluminum, stainless steel, aluminum alloy, and plastic, which are not particularly limited in the embodiments of the present application.

The electrode assembly 124 is a component that undergoes electrochemical reactions in the battery cell 121. The housing 123 may include one or more electrode assemblies 124. The electrode assembly 124 is mainly formed by winding or laminating a positive electrode plate and a negative electrode plate, and a separator is generally provided between the positive electrode plate and the negative electrode plate. Parts of the positive electrode plate and the negative electrode plate with active substances constitute a main body portion of the electrode assembly 124, while parts of the positive electrode plate and the negative electrode plate without active substances separately constitute a tab (not shown). The positive electrode tab and the negative electrode tab may be located at one end of the main body portion together or at two ends of the main body portion separately. During charging and discharging of the battery, a positive electrode active substance and a negative electrode active substance react with an electrolytic solution, and the tabs are connected to the electrode terminals 125 to form a current loop.

A first aspect of the present application provides a heat exchange assembly 400, configured to carry a battery cell 121 and provide a heat exchange function, to ensure uniform heat exchange of the battery cell 121, thereby prolonging a service life and improving charging and discharging efficiency of the battery.

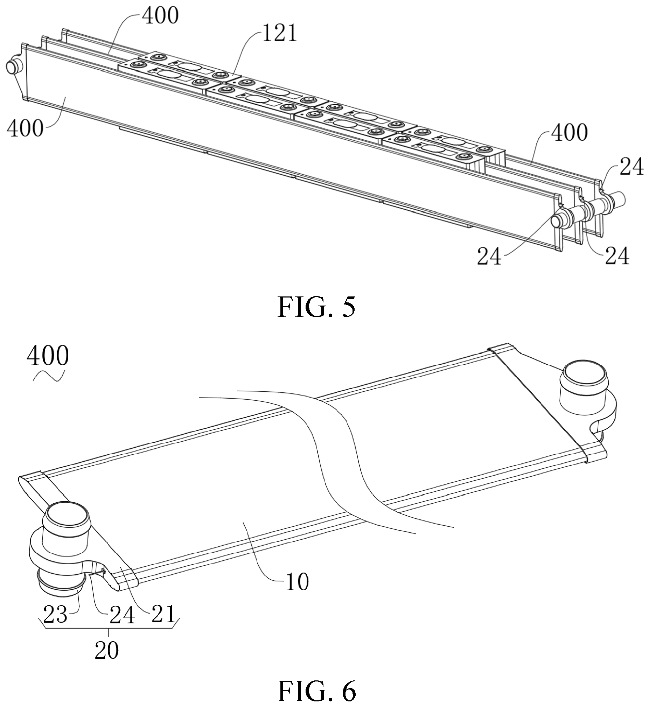

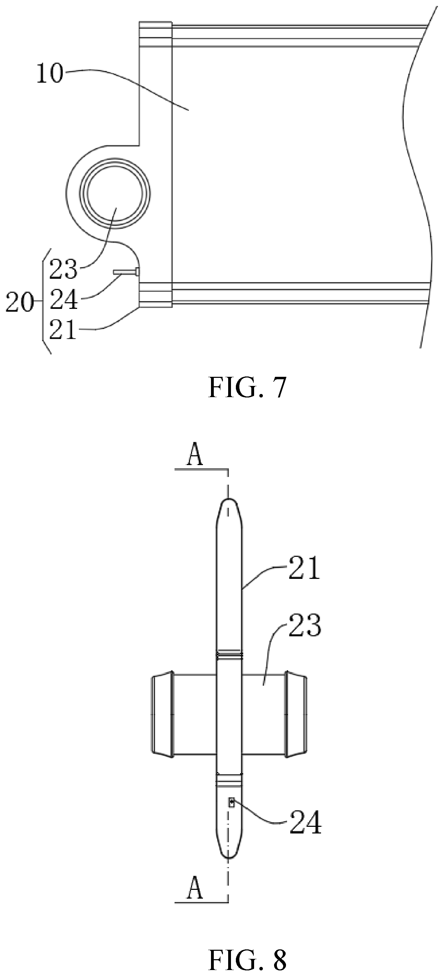

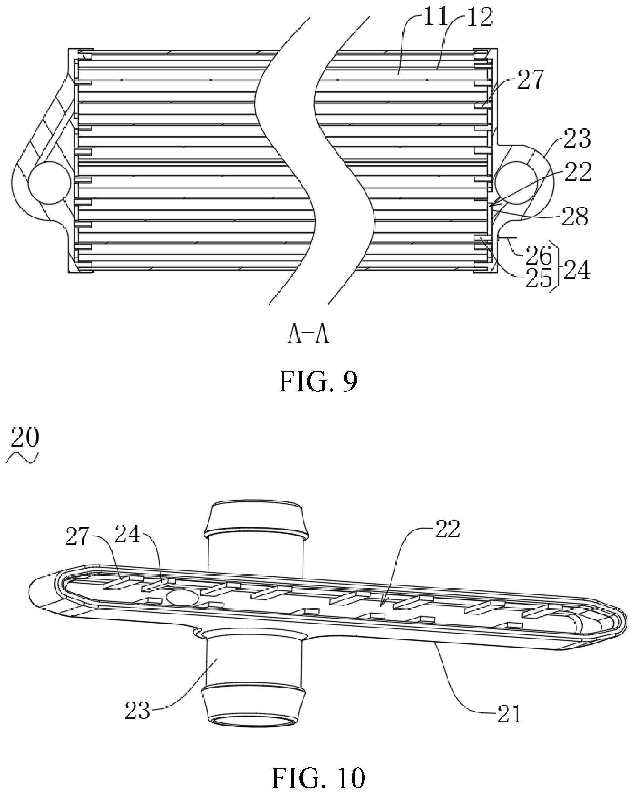

Referring to FIG. 5 to FIG. 10, FIG. 5 is a schematic diagram of cooperation between a battery cell and a heat exchange assembly according to some embodiments of the present application. FIG. 6 is a schematic structural diagram of a heat exchange assembly according to some embodiments of the present application. FIG. 7 is a partial schematic diagram of assembly between a heat exchange body and a flow collector according to some embodiments of the present application. FIG. 8 is a side view of a heat exchange assembly according to some embodiments of the present application. FIG. 9 is a cross-sectional view along A-A of the heat exchange assembly shown in FIG. 8. FIG. 10 is a schematic structural diagram of a flow collector according to some embodiments of the present application.

The heat exchange assembly 400 includes a heat exchange body 10, a flow collector 20, and a sensing apparatus 24.

A side wall of the heat exchange body 10 is usually used as a main wall surface structure for carrying the battery cell 121. A heat exchange medium flows inside the heat exchange body 10 to perform heat exchange with the battery cell 121. The heat exchange medium may be water, alcohol, or another liquid mixture. During flowing inside the heat exchange body 10, the heat exchange medium can effectively absorb heat transferred from the side wall of the heat exchange body 10, thereby dissipating heat and reducing a temperature, or can transfer heat to the side wall of the heat exchange body 10, thereby increasing the temperature.

The flow collector 20 is disposed on at least one end of the heat exchange body 10, and the flow collector 20 is configured to lead the heat exchange medium out of or into the heat exchange body 10. Specifically, the flow collector 20 is disposed on an end of the heat exchange body 10 and is configured to connect to an external pipeline to input or output the heat exchange medium. The flow collector 20 includes a flow collecting body 21, and the flow collecting body 21 covers on the heat exchange body 10. Specifically, two groups of flow collectors 20 may be arranged to respectively match two ends of the heat exchange body 10, and communicate with a heat exchange flow channel 11 (mentioned below) inside the heat exchange body 10. A region in which the flow collecting body 21 of the flow collector 20 is sleeved with the heat exchange body 10 is usually not used for placing the battery cell 121. In this way, the heat exchange medium enters one end of the heat exchange flow channel 11 through the flow collector 20 on one end of the heat exchange body 10, and circulates in the heat exchange flow channel 11, so that the heat exchange body 10 provides heat exchange for the battery cell 121, to ensure that the battery cell 121 operates at a suitable ambient temperature. The heat exchange medium after heat exchange flows from the other end of the heat exchange flow channel 11 back to the flow collector 20 on the other end, to implement circulation of the heat exchange medium.

The sensing apparatus 24 is disposed on the flow collector 20, to sense one or more of a pressure, a flow rate, and a temperature of the heat exchange medium. Specifically, the sensing apparatus 24 is disposed on the flow collecting body 21 of the flow collector 20. In this way, a current condition of the heat exchange medium inside each heat exchange body 10 can be sensed by using the sensing apparatus 24, and further, the current condition is used as a basis for a control module (mentioned below) to determine a working status of the heat exchange assembly 400, and can be fed back in time when a problem occurs in the heat exchange assembly. When a condition such as sealing of a flow channel, or leakage of the heat exchange medium due to aging and cracking of the heat exchange body 10, or leakage of the heat exchange medium due to crushing and deformation of the heat exchange body 10 by a weight of a battery cell occurs inside the heat exchange body 10, the sensing apparatus 24 can effectively sense the current working status by using one or more of the pressure, the flow rate, and the temperature of the heat exchange medium, to effectively detect a temperature change of each heat exchange body 10 and confirm a circulation status of the heat exchange medium. When an abnormality occurs in the heat exchange body 10, warning is performed in advance, to ensure that the battery cell 121 operates at a suitable operating temperature, thereby prolonging a service life of the battery cell 121 and improve performance of the battery cell 121. In addition, when a plurality of heat exchange assemblies 400 are stacked, and a battery cell 121 is placed between two heat exchange assemblies 400 to perform heat exchange, after a problem occurs in one of the heat exchange assemblies 400, a fault can be quickly located by using a sensing apparatus 24 corresponding to the heat exchange assembly 400, to remove potential safety hazards in time and ensure safety.

In some embodiments, a shape of a cross section of an opening of the flow collector 20 should match an end of the heat exchange body 10, to ensure that the two can implement insertion. For example, interference insertion, welding, or threading may be used.

In some embodiments, the sensing apparatus 24 may be a temperature sensor. The sensing apparatus 24 is disposed on the flow collecting body 21, to sense a temperature of the heat exchange medium, and provide warning in advance when the temperature of the heat exchange medium in the heat exchange body 10 is excessively low, excessively high, or changes excessively greatly.

In some embodiments, the sensing apparatus 24 is a pressure sensor. The sensing apparatus 24 is disposed on the flow collecting body 21, to sense a pressure of the heat exchange medium, and provide warning in advance when the pressure of the heat exchange medium in the heat exchange body 10 is excessively low or excessively high, or changes excessively greatly.

In some embodiments, the sensing apparatus 24 is a speed sensor. The sensing apparatus 24 is disposed on the flow collecting body 21, to sense a flow rate of the heat exchange medium, and provide warning in advance when the flow rate of the heat exchange medium in the heat exchange body 10 is excessively low or excessively high, or changes excessively greatly.

In some possible embodiments, the flow collector 20 may include one sensing apparatus 24, to sense one of the pressure, the flow rate, or the temperature of the heat exchange medium. In some other embodiments, the flow collector 20 includes two or two sensing apparatuses 24, to respectively sense one of the pressure, the flow rate, and the temperature of the heat exchange medium.

In some possible embodiments, referring to FIG. 5 to FIG. 10, the flow collector 20 includes a connection pipe 23, an insertion cavity 22 open on one side is formed on the flow collecting body 21, an end of the heat exchange body 10 is inserted into the insertion cavity 22; and the connection pipe 23 passes through a side wall of the insertion cavity 22.

The flow collecting body 21 is usually made of a plastic piece or an aluminum alloy material. A shape of a cross-sectional of the insertion cavity 22 should match a cross-section of an end of the heat exchange body 10. An opening of the insertion cavity 22 may be a flat open slot, to facilitate interference insertion of the end of the heat exchange body 10 in the insertion cavity 22 of the flow collecting body 21. The connection pipe 23 is usually a metal pipe joint, and the connection pipe 23 is in sealing connection with the flow collecting body 21 by means of welding, pressure contact, or the like. In addition, the connection pipe 23 may alternatively be a plastic joint integrally cast with the flow collecting body 21. The connection pipe 23 passes through the side wall of the insertion cavity 22, to communicate with the heat exchange flow channel 11 through the insertion cavity 22. A section of the connection pipe 23 located outside the flow collecting body 21 is formed as a connection port, to communicate with an external pipeline for circulating the heat exchange medium. Details are not described herein again.

When a plurality of heat exchange assemblies 400 are stacked, connection pipes 23 on flow collectors 20 of the heat exchange assemblies are connected to each other, which may be sealing connection such as welding or pressure contact, thereby implementing communication between the plurality of heat exchange assemblies 400.

The sensing apparatus 24 at least partially extends into the insertion cavity 22. In this way, the sensing apparatus 24 can sense the one or more performance indicators of the pressure, the flow rate, and the temperature of the heat exchange medium in time and accurately, and further, the one or more performance indicators can be used as a basis for the control module to determine the working status of the heat exchange assembly 400, and can be fed back in time when a problem occurs in the heat exchange assembly 400. When the heat exchange body 10 has an abnormality, warning can be provided in advance, to ensure that the battery cell 121 operates at a suitable operating temperature, thereby prolonging a service life of the battery cell 121 and improve performance of the battery cell 121. When a problem occurs in one heat exchange assembly 400, a fault can be quickly located by using a sensing apparatus 24 corresponding to the heat exchange assembly 400, to exclude potential safety hazards in time, thereby ensuring safety.

In some possible embodiments, referring to FIG. 5 to FIG. 10, the connection pipe 23 is formed as a flow channel port 28 on a cavity wall of the insertion cavity 22, to implement circulation of the heat exchange medium.

In some possible embodiments, referring to FIG. 5 to FIG. 10, the flow collecting body 21 includes a plurality of fasteners 27, the fasteners 27 are erected in the insertion cavity 22, a gap is formed between the fastener 27 and a side wall of the insertion cavity 22, and a side wall of an end of the heat exchange body 10 is capable of being inserted into the gap.

The fastener 27 may be a plate, or may be a convex post, a convex strip, or another fastening structure.

The heat exchange body 10 is a plate structure with a flat cross section, and is surrounded by two oppositely disposed large surfaces (not shown) with a large area and a side surface (not shown) connecting the two large surfaces. The large face and the side face are side walls of the heat exchange body 10, and a width of the gap is usually slightly less than a thickness of the side wall of the heat exchange body 10. In this way, when the side wall of the end of the heat exchange body 10 is inserted in the gap between the fastener 27 and the side wall of the insertion cavity 22, the fastener 27 can be slightly deformed, so that the heat exchange body 10 is more securely inserted in the insertion cavity 22 of the flow collecting body 21, thereby avoiding separation of the two, and facilitating subsequent welding and fixing.

In some possible embodiments, referring to FIG. 5 to FIG. 10, the sensing apparatus 24 includes a collection terminal 25 and a connector 26.

The collection terminal 25 at least partially extends into the heat exchange body 10, to sense the one or more of the pressure, the flow rate, and the temperature of the heat exchange medium. Specifically, the collection terminal 25 is located in the insertion cavity 22. The collection terminal 25 may be a thermistor element, a varistor element, or a photoelectric sensor according to requirements.

The connector 26 is disposed on a side of the flow collector 20 facing away from the heat exchange body 10 and is electrically connected to the collection terminal 25; and the connector 26 is capable of being configured to perform signal connection with an external apparatus. The connector 26 may be a wire harness plug or socket, or may be a wire connected to an external control module.

By disposing the collection terminal 25 and the connector 26, the current condition of the heat exchange medium inside each heat exchange body 10 can be sensed by using a corresponding collection terminal 25. For example, the collection terminal 25 may collect one or more of the pressure, the flow rate, and the temperature of the heat exchange medium. When a condition such as sealing of a flow channel, or leakage of the heat exchange medium due to aging and cracking of the heat exchange body 10, or leakage of the heat exchange medium due to crushing and deformation of the heat exchange body 10 by a weight of a battery cell occurs inside the heat exchange body 10, a relatively large change occurs in the temperature, the flow rate, or the pressure of the heat exchange medium. The collection terminal 25 converts the change into a corresponding electric signal and transmits the electric signal to the connector 26. The connector 26 then transmits the electric signal to an external apparatus (such as the control module), so that the electric signal is used as a basis for determining the working status of the current heat exchange assembly 400, and can be fed back in time when the problem occurs in the heat exchange assembly 400.

In some possible embodiments, referring to FIG. 5 to FIG. 10, the sensing apparatus 24 and the flow collector 20 are integrally injection-molded. Specifically, the sensing apparatus 24 and the flow collecting body 21 are integrally injection-molded. The flow collecting body 21 may be injection-molded by using plastic. The collection terminal 25 of the sensing apparatus 24 is placed in a mold in advance and then is integrally injection-molded, to ensure that the collection terminal 25 is located in the insertion cavity 22 to sense one or more of a pressure, a flow rate, and a temperature of the heat exchange medium. A region at which the sensing apparatus 24 and the flow collecting body 21 are connected is kept sealed by means of integral injection-molding, to prevent the heat exchange medium from leaking from the connection position between the sensing apparatus 24 and the flow collecting body 21, thereby ensuring the heat exchange function of the heat exchange assembly 400.

In some possible embodiments, referring to FIG. 5 to FIG. 10, a plurality of support plates 12 are arranged at intervals inside the heat exchange body 10, to form a plurality of heat exchange flow channels 11 separated from each other in an inner space of the heat exchange body 10.

All the support plates 12 are arranged at intervals in the heat exchange body 10, and extend along a length direction of the heat exchange body 10 until openings are respectively formed at two ends of the heat exchange body 10. The flow collecting body 21 covers an end of the heat exchange body 10, so that the insertion cavity 22 communicates with the heat exchange flow channel 11. The support plate 12 forms a plurality of heat exchange flow channels 11 separated from each other in the inner space of the heat exchange body 10. In this way, it is convenient for the heat exchange medium to respectively enter different heat exchange flow channels 13 to flow according to predetermined tracks, thereby improving the heat exchange efficiency.

The sensing apparatus 24 can perform sensing detection on at least one of the heat exchange flow channels 11, to sense one or more of a pressure, a flow rate, and a temperature of the heat exchange medium in the heat exchange flow channel 11. When a condition such as sealing of a flow channel, or leakage of the heat exchange medium due to aging and cracking of the heat exchange body 10, or leakage of the heat exchange medium due to crushing and deformation of the heat exchange body 10 by a weight of a battery cell occurs inside the heat exchange body 10, a relatively large change occurs in the temperature, the flow rate, or the pressure of the heat exchange medium, and the sensing apparatus 24 can feed back corresponding information in time to be used as a basis for determining a working status of the current heat exchange assembly 400.

In some embodiments, the heat exchange body 10 and the support plate 12 are integrally connected, and the connection may be processed at a time in a form such as injection or stamping. The process is simple and costs are low.

In some embodiments, the support plate 12 may be an aluminum alloy plate or a plastic plate.

In some possible embodiments, referring to FIG. 5 to FIG. 10, the heat exchange body 10 is a harmonica pipe, and has good heat exchange performance. In addition, the heat exchange body 10 may alternatively be a profile liquid heat exchange plate or a stamping fluid heat exchange plate. This is not limited in the embodiments of the present application.

In some embodiments, the heat exchange body 10 may be an aluminum alloy pipe housing, and has good strength, low weight, and relatively good thermal conduction. In addition, the heat exchange body 10 may alternatively be a plastic pipe housing, which is specifically subject to design.

In some embodiments, the heat exchange body 10 is a plate structure with a flat cross section, and two oppositely disposed large surfaces with a large area on the heat exchange body 10 may generally be used as heat exchange surfaces, to carry the battery cell 121 and also implement heat exchange. The heat exchange body 10 further includes a side surface (not shown) connecting the two large surfaces. The large surface of the heat exchange body 10 is usually a horizontal plate surface or an arc surface close to a horizontal surface, and the side surface may be an arc surface, to improve overall stiffness of the heat exchange body 10, and prevent crushing due to a weight of the battery cell 121.

In some possible embodiments, referring to FIG. 5 to FIG. 10, when the heat exchange assembly includes two groups of flow collectors 20, current collecting bodies 21 of the two groups of flow collectors 20 respectively cover two ends of the heat exchange body 10. Sensing apparatuses 23 on the two groups of flow collectors 20 sense a status of the heat exchange assembly 400, to transmit a status signal to an external apparatus (such as a control module) in time as a basis for determining a current working status of the heat exchange assembly 400, to provide warning in advance, ensure that the battery cell 121 operates at a suitable working temperature, prolong a service life of the battery cell 121 and improve performance of the battery cell 121, and quickly locate a fault by using the sensing apparatus 24 corresponding to the heat exchange assembly 400, to exclude potential safety hazards in time, thereby ensuring safety.

In some possible embodiments, referring to FIG. 5 to FIG. 10, the heat exchange assembly includes two groups of flow collectors 20. Two ends of the heat exchange body 10 are respectively a liquid outlet end and a liquid inlet end along a flow direction of the heat exchange medium, the two groups of flow collectors 20 respectively cover the liquid outlet end and the liquid inlet end of the heat exchange body 10; and the sensing apparatus 24 is disposed on a flow collector 20 located on the liquid outlet end of the heat exchange body 10.

In this way, the control module of the battery management system can sense a flow condition of the heat exchange medium inside each heat exchange body 10 by using the sensing apparatus 24. When a condition such as sealing of a flow channel, or leakage of the heat exchange medium due to aging and cracking of the heat exchange body 10, or leakage of the heat exchange medium due to crushing and deformation of the heat exchange body 10 by a weight of a battery cell occurs inside the heat exchange body 10, a change amplitude of a pressure, a flow rate, and a temperature of the heat exchange medium at the liquid inlet end of the heat exchange body 10 is not significant. However, because the heat exchange medium cannot reach the liquid outlet end through the heat exchange flow channel 11, a change of a pressure, a flow rate, and a temperature of the heat exchange medium sensed by a sensing apparatus 24 located at the liquid outlet end of the heat exchange body 10 is relatively large. Therefore, the change is easily sensed by the sensing apparatus 24, and further can be transmitted to an external apparatus (such as the control module), so that the change is used as a basis for determining the working status of the current heat exchange assembly 400.

In other words, the sensing apparatus 24 is disposed on the flow collector body 21 of the flow collector 20 on the liquid outlet end of the heat exchange body 10, so that sensing of the sensing apparatus 24 is more sensitive and accurate.

It may be understood that the liquid inlet end of the heat exchange body 10 cooperates with another group of flow collectors 20, to input the heat exchange medium, to implement circulating heat exchange of the heat exchange medium. A sensing apparatus 24 does not need to be disposed on a flow collector 20 located at the liquid inlet end, to reduce costs and simplify control.

In some other possible embodiments, the heat exchange assembly includes two groups of flow collectors 20 and two sensing apparatuses 24. Two ends of the heat exchange body 10 are respectively a liquid outlet end and a liquid inlet end along a flow direction of the heat exchange medium, the two groups of flow collectors 20 respectively cover the liquid outlet end and the liquid inlet end of the heat exchange body 10; and the two sensing apparatuses 24 are respectively disposed on the two groups of flow collectors 20.

A second aspect of the present application provides a battery 100. Referring to FIG. 1 to FIG. 10, the battery 100 includes a battery cell 121 and the foregoing heat exchange assembly 400, a side wall of at least one side of the heat exchange body 10 is thermal-conductively connected to the battery cell 121, to implement uniform heat exchange.

In some embodiments, the battery 100 includes only one heat exchange assembly 400. A side wall of at least one side of the heat exchange body 10 is thermal-conductively connected to the battery cell 121, to implement uniform heat exchange.

In some other embodiments, referring to FIG. 5, the battery 100 may include a plurality of stacked heat exchange assemblies 400, and the battery cell 121 is placed between two heat exchange assemblies 400.

Connection pipes 23 of flow collectors 20 on one ends of heat exchange bodies 10 of heat exchange assemblies 400 are connected to each other and may be connected to an external main liquid inlet pipe. Connection pipes 23 of flow collectors 20 on the other ends of the heat exchange bodies 10 of the heat exchange assemblies 400 are connected to each other and may be connected to an external main liquid outlet pipe. The heat exchange medium is uniformly inputted through the main liquid inlet pipe, is shunted to heat exchange bodies 10 by a flow collector 20 at one end, and then flows out of a flow collector 20 on the other end after completing heat exchange with the battery cell 121, to form an exchange circulation, to complete a cooling or heating function on the battery cell 121, ensure that the battery cell 121 works at a suitable working temperature, prolong a service life of the battery cell 121, and improve performance of the battery cell 121.

A third aspect of the present application provides a battery management system, including a control module and the foregoing battery 100, where the control module is in signal connection with the sensing apparatus 24.

Collection terminals 25 of a sensing apparatus 24 on a flow collector body 10 on the liquid outlet end of the heat exchange body 10 may be arranged on a flow channel port 28. In this way, in a working process of the heat exchange assembly 400, the collection terminal 25 can more accurately sense the one or more performance indicators of the pressure, the flow rate, and the temperature of the heat exchange medium, and the one or more performance indicators can further be used as a basis for the control module to determine the working status of the heat exchange assembly, and can be fed back in time when a problem occurs in the heat exchange assembly. It should be understood that, the change of the performance indicator may be determined based on the indicator such as the temperature, the pressure, or the flow rate, or may be determined based on another indicator of the heat exchange medium.

When a temperature of the battery cell 121 is relatively high, the battery 100 uses the heat exchange assembly 400 to perform cooling circulation. If the heat exchange body 10 is crushed, the heat exchange medium leaks, and there is no heat exchange medium or only a small amount of heat exchange medium in the heat exchange flow channel 11, a temperature of the heat exchange medium at a liquid outlet end of the heat exchange body 10 rises. When the temperature exceeds a set range, the collection terminal 25 converts a corresponding electric signal and transmits the electric signal to the connector 26. The connector 26 then transmits the electric signal to a control module connected to the connector 26, thereby implementing warning. In other words, a user is informed that there is a safety risk during operation of the vehicle. Especially, when the vehicle has a collision or thermal runaway of a battery pack caused by another case, and consequently cannot effectively prevent heat propagation, timely warning can effectively ensure safety of the user.

Similarly, when the battery is used in winter, a temperature of the battery cell 121 is relatively low, and the battery 100 uses the heat exchange assembly 400 to perform heating circulation. If the heat exchange body 10 is crushed, the heat exchange medium leaks, and there is no heat exchange medium or only a small amount of heat exchange medium in the heat exchange flow channel 11, a temperature of the heat exchange medium at a liquid outlet end of the heat exchange body 10 is relatively low. When the temperature exceeds a set range, the collection terminal 25 converts a corresponding electric signal and transmits the electric signal to the connector 26. The connector 26 then transmits the electric signal to a control module connected to the connector 26, thereby implementing warning. In other words, a user is informed that there is a safety risk during operation of the vehicle, and a position of the fault in the heat exchange assembly 400 can be accurately prompted, which is convenient for quickly removing the fault.

A fourth aspect of the present application provides a power consuming apparatus, including the foregoing battery 100. The battery 100 is configured to supply electrical energy to the power consuming apparatus.

The technical features in the foregoing embodiments may be combined in different manners to form other embodiments. For concise description, not all possible combinations of the technical features in the embodiments are described. However, the combinations of the technical features are all to be considered as falling within the scope described in this specification provided that they do not conflict with each other.

The foregoing embodiments only describe several implementations of the present application, and are described in detail, but they are not to be construed as a limitation to the patent scope of the present application. A person of ordinary skill in the art may further make variations and improvements without departing from the ideas of the present application, which shall fall within the protection scope of the present application. Therefore, the protection scope of the patent of the present application shall be subject to the appended claims.

## Claims

1. A heat exchange assembly, comprising:
a heat exchange body (10), wherein a heat exchange medium flows inside;
a flow collector (20), wherein the flow collector (20) is disposed on at least one end of the heat exchange body (10), and the flow collector (20) is configured to lead the heat exchange medium out of or into the heat exchange body (10); and
a sensing apparatus (24), wherein the sensing apparatus (24) is disposed on the flow collector (20), to sense one or more of a pressure, a flow rate, and a temperature of the heat exchange medium.

2. The heat exchange assembly according to claim 1, wherein the sensing apparatus (24) comprises a collection terminal (25) and a connector (26);
the collection terminal (25) at least partially extends into the heat exchange body (10), to sense the one or more of the pressure, the flow rate, and the temperature of the heat exchange medium; and
the connector (26) is disposed on a side of the flow collector (20) facing away from the heat exchange body (10) and is connected to the collection terminal (25); and the connector (26) is capable of being configured to perform signal connection with an external apparatus.

3. The heat exchange assembly according to claim 1 or 2, wherein the sensing apparatus (24) and the flow collector (20) are integrally injection-molded.

4. The heat exchange assembly according to any one of claims 1 to 3, wherein the sensing apparatus (24) is a temperature sensor; or
the sensing apparatus (24) is a pressure sensor; or
the sensing apparatus (24) is a speed sensor.

5. The heat exchange assembly according to any one of claims 1 to 4, wherein a plurality of support plates (12) are arranged at intervals inside the heat exchange body (10), to form a plurality of heat exchange flow channels (11) separated from each other in an inner space of the heat exchange body (10); and
the sensing apparatus (24) is capable of performing sensing detection on at least one of the heat exchange flow channels (11).

6. The heat exchange assembly according to any one of claims 1 to 5, wherein the heat exchange body (10) is a harmonica pipe.

7. The heat exchange assembly according to any one of claims 1 to 6, wherein the heat exchange assembly comprises two groups of flow collectors (20); the two groups of flow collectors (20) respectively cover a liquid outlet end and a liquid inlet end of the heat exchange body (10); and the sensing apparatus (24) is disposed on a flow collector (20) located on the liquid outlet end of the heat exchange body (10).

8. The heat exchange assembly according to claim 2, wherein the flow collector (20) comprises a flow collecting body (21), and an insertion cavity (22) open on one side is formed on the flow collecting body (21); and an end of the heat exchange body (10) is inserted into the insertion cavity (22); and
the sensing apparatus (24) at least partially extends into the insertion cavity (22).

9. The heat exchange assembly according to claim 8, wherein the flow collecting body (21) comprises a plurality of fasteners (27), the fasteners (27) are erected in the insertion cavity (22), a gap is formed between the fastener (27) and a side wall of the insertion cavity (22), and a side wall of an end of the heat exchange body (10) is capable of being inserted into the gap.

10. The heat exchange assembly according to claim 8 or 9, wherein the flow collector (20) comprises a connection pipe (23), and the connection pipe (23) passes through the insertion cavity (22); and the connection pipe (23) is formed as a flow channel port (28) on a cavity wall of the insertion cavity (22); and
the collection terminal (25) is located on the flow channel port (28).

11. A battery, comprising a battery cell (121) and the heat exchange assembly according to any one of claims 1 to 10, wherein
a side wall of at least one side of the heat exchange body (10) is thermal-conductively connected to the battery cell (121).

12. A battery management system, comprising a control module and the battery according to claim 11, wherein the control module is in signal connection with the sensing apparatus (24).

13. A power consuming apparatus, comprising the battery according to claim 11.
